# EUROPÄISCHE PATENTSCHRIFT

(11) **EP 1 058 341 B1**
(45) Veröffentlichungstag und Bekanntmachung des Hinweises auf die Patenterteilung: **28.08.2002**
(21) Anmeldenummer: 00102484.3
(22) Anmeldetag: 05.02.2000
(51) Int. Cl.: H01Q 13/24, H01Q 19/08, H01P 5/08, G01F 23/284

(54) **Anordnung aus einem Hohlleiter und einer Antenne**
Hollow waveguide and antenna arrangement
Disposition d'un guide d'ondes et d'une antenne

(30) Priorität: 17.05.1999 DE 19922606
(43) Veröffentlichungstag der Anmeldung: 06.12.2000
(73) Patentinhaber: VEGA Grieshaber KG, 77709 Wolfach (DE)
(72) Erfinder: Fehrenbach, Josef, 77716 Haslach (DE); Motzer, Jürgen, 77723 Gengenbach (DE); Schultheiss, Daniel, 78132 Hornberg (DE)
(74) Vertreter: Patentanwälte Westphal, Mussgnug & Partner

(56) Entgegenhaltungen:
- EP-A- 0 612 120
- EP-A- 0 616 385
- WO-A-83/01711
- DE-U- 9 412 243
- US-A- 4 940 990
- US-A- 5 017 937

## Beschreibung

Die Erfindung betrifft eine Anordnung mit einem Hohlleiter und einer Antenne gemäß den Merkmalen des Anspruchs 1.

Eine solche Antennenanrodnung ist z.B. aus US-A-5,017,937 beaknnt. Mit der dort beschriebenen Anordnung soll eine konstante Richtcharakteristik über einen weiten Frequenzbereich zu erhalten werden. Die Antenneneinrichtung wird dabei aus Horn und Stabantenne kombiniert. Der Querschnitt des Hohlleiters bleibt vielmehr dabei bis zum Beginn der Hornantenne konstant.

In der HF-Technik werden Hohlleiter runden oder rechteckförmigen Querschnitts, die entsprechend ihrem Querschnitt als Rund- oder Rechteckhohlleiter bezeichnet werden, eingesetzt, um HF-Signale zu übertragen. Ein Hohlleiter kann innen mit Luft oder einem festen Dielektrikum gefüllt sein. Zur Abstrahlung in den Freiraum ist am Ende eines Hohlleiters eine Antenne angeordnet, z. B. eine Hornantenne.

Bei einer Vielzahl von Ausführungsformen geht der Hohlleiter dabei dergestalt in die Antenne über, dass sich der Querschnitt des Dielektrikums allmählich verjüngt, während sich der Durchmesser des Hohlleiters nach außen hin erweitert, so dass eine Anordnung aus einem metallischen Trichter gebildet wird, in dessen Inneren ein Kegel aus Dielektrikummaterial sitzt, dessen Spitze bis zum Trichtereingang reichen kann. Der Teil des Dielektrikums, der sich im Antennenbereich verjüngt, wird als Querschnittsanpasser - englisch Taper - bezeichnet. Ein Hohlleiter rechteckförmigen Querschnitts hat daher einen pyramidenförmigen Querschnittsanpasser, während bei kreisförmigen Hohlleitern der Querschnittsanpasser kegelförmig ausgeführt ist.

Die Übertragungseigenschaften eines Hohlleiters hängen von der Frequenz des zu übertragenden Signales, dem Querschnitt des Hohlleiters und der relativen Dielektrizitätskonstanten εᵣ des den Innenraum des Hohlleiters ausfüllenden Dielektrikums ab. Bei vorgegebener Frequenz und vorgegebenem Dielektrikum wird der Durchmesser bzw. Querschnitt des Hohlleiters so gewählt, dass optimale Übertragungs-, Sende- und Empfangseigenschaften für die Frequenz des zu übertragenden HF-Signales erzielt werden.

Hohlleiter mit an einem Ende angeordneten Antennen werden jedoch nicht nur in der Nachrichtentechnik, sondern auch in der Messtechnik eingesetzt, beispielsweise bei der Füllstandsmessung festen Schüttgutes oder einer Flüssigkeit in einem Behälter. Das Messprinzip zur Füllstandsmessung beruht darauf, kurze Mikrowellenimpulse von der Antenne auszusenden. In einem kombinierten Sende- und Empfangssystem werden die vom Füllgut zurück zur Antenne reflektierten Impulse erfaßt. Durch Laufzeitmessung dieser vom Füllgut reflektierten Impulse wird der Abstand zwischen Antenne und Füllgut ermittelt. Die Abstrahlung der Mikrowellen im Behälterinnern erfolgt über eine Antenne, z. B. eine Hornantenne, an die ein Hohlleiter angeschlossen ist, so dass sich im Behälter keinerlei temperaturempfindliche Komponenten befinden.

Derartige Antenneneinrichtungen zum Messen des Füllstandes sind z. B. in dem DE 94 12 243 U der Anmelderin beschrieben.

EP-A-0 616 385 zeigt ebenfalls lediglich einen Hohlleiter mit konstanten Durchmesser, an den sich unmittelbar die Hornantenne anschließt. In EP-A-0 612 120 ist eine ähnliche Anordnung beschrieben.

US-A-4,940,990 befaßt sich mit einem Hohlleiter, an dem sich ein pyramidenförmiges Horn unmittelbar anschließt.

WO 83 01 711 A zeigt eine ähnliche Antenneneinrichtung.

Je höher die Frequenz des zu übertragenden HF-Signales und je größer die relative Dielektrizitätskonstante εᵣ des den Hohlleiter füllenden Dielektrikums sind, desto geringer ist der Durchmesser des Hohlleiters zu wählen, um optimale Übertragungseigenschaften zu erzielen. So beträgt der Durchmesser eines Rundhohlleiters, der für eine Frequenz von z. B. 24 GHz optimiert ist und mit Teflon (eingetragenes Warenzeichen) als Dielektrikum gefüllt ist, nur etwa 6,5 mm. Wird als Dielektrikum Aluminiumoxid-Keramik vorgesehen, so ist ein Durchmesser von nur noch 3 mm für die Frequenz von 24 GHz optimal.

Bei der Füllstandsmessung tritt immer wieder das Problem von Kondensat im Antennensystem auf. Bildet sich ein Kondensattropfen im Antennenbereich, beispielsweise auf dem Querschnittsanpasser, so wird ein Teil der Querschnittsfläche des Querschnittsanpassers abgedeckt. Die Kondensattropfen reflektieren einen Teil des von der Oberfläche des Füllgutes zur Antenne reflektierten HF-Signales zurück zur Oberfläche des Füllgutes. In gleicher Weise wird das Sendesignal am Kondensattropfen zurück zum Sender/Empfänger reflektiert und von dort wieder ein Teil zur Antenne. Je größer die Kondensattropfen und je größer ihre relative Dielektrizitätskonstante εᵣ sind, desto stärker wird die Reflexion zurück zur Oberfläche des Füllgutes bzw. zurück zum Geräteinnern (Sender/Empfänger). Je größer aber die von den Kondensattropfen benetzte Fläche auf dem Querschnittsanpasser im Verhältnis zu seiner Oberfläche ist, desto größer wird der Anteil des zurück zur Oberfläche des Füllgutes bzw. Senders/Empfängers reflektierten HF-Signales. So deckt z. B. ein Tropfen von 2 mm Durchmesser bereits etwa 44 % der Fläche des Querschnittanpassers eines mit Keramik gefüllten Hohlleiters bei einer Frequenz des HF-Signales von 24 GHz ab. Wegen der dadurch bedingten starken Reflexion nimmt die Echoamplitude des Messsignales stark ab sowie das als "Klingeln" bezeichnete Störechogemisch zu.

Um trotz der Kondensattropfen auf dem Querschnittsanpasser eine Echoamplitude des Messsignals ausreichender Größe zu erzielen, werden Hohlleiter mit größeren Abmessungen eingesetzt. In Folge der größeren Oberfläche des Querschnittsanpassers wird zwar die Empfindlichkeit gegenüber Kondensattropfen verringert, jedoch sind der Hohlleiter und die Antenne nun nicht mehr bezüglich ihrer Übertragungs-, Sende- und Empfangseigenschaften optimal an die Frequenz des HF-Signales angepaßt. Im größer dimensionierten Hohlleiter können sich nun außer dem Grundmode auch die höheren Moden der Sendefrequenz ausbreiten, die wegen ihrer unterschiedlichen Signallaufzeiten das Messsignal verfälschende Echos erzeugen.

Weil die Forderung nach geringer Empfindlichkeit gegenüber Kondensattropfen nicht mit der Forderung nach optimierten Übertragungs-, Sende- und Empfangseigenschaften bezüglich der Frequenz des HF-Signales vereinbar ist, wird in der Praxis ein Kompromiss zwischen Empfindlichkeit auf Kondensattropfen und optimaler Anpassung an die Frequenz angestrebt. Die Abmessungen des Hohlleiters und einer an ihn angeschlossenen Antenne werden daher so gewählt, dass die einerseits durch Kondensattropfen und andererseits durch Mehrmodigkeit des Hohlleiters verursachte Gesamtverfälschung - bedingt durch Reflexion und Echos - des Messsignales minimal wird.

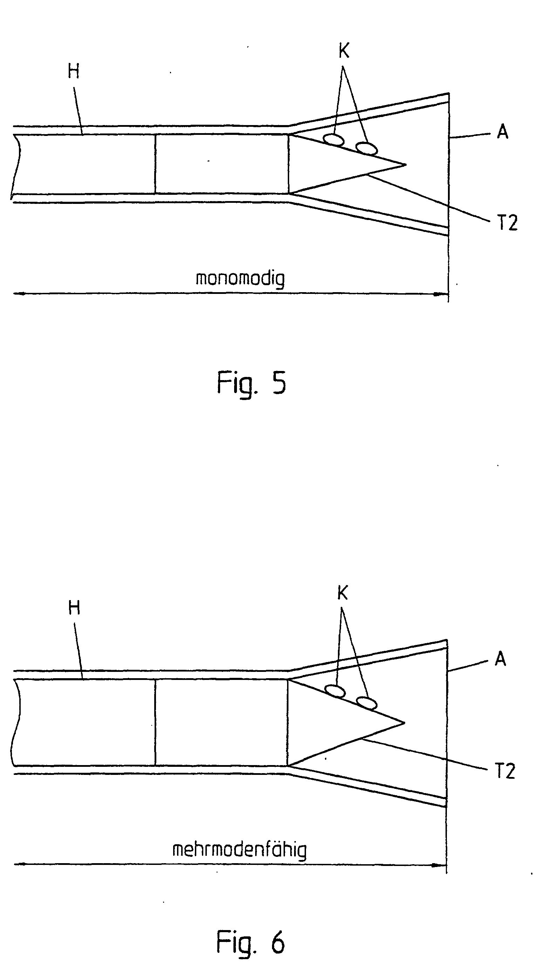

In Figur 5 sind ein monomodiger Hohlleiter H und eine Antenne A, in deren Trichter ein Querschnittsanpasser T2 sitzt, gezeigt, auf dem sich zwei Kondensattropfen K gebildet haben. Um die Empfindlichkeit gegen Kondensattropfen zu verringern, ist diese Anordnung aus der Figur 5, wie in der Figur 6 dargestellt, größer dimensioniert. Dadurch können im Hohlleiter aber höhere Moden entstehen.

Aufgabe der Erfindung ist es, eine Anordnung aus einem Hohlleiter und einer an ihn angeschlossenen Antenne so zu gestalten, dass sowohl die Forderung nach geringer Empfindlichkeit gegenüber Kondensattropfen als auch die Forderung nach optimierten elektrischen Eigenschaften gleichzeitig optimal erfüllt werden.

Diese Aufgabe wird dadurch gelöst, dass der Hohlleiter in Bezug auf die Frequenz des zu übertragenden Signals monomodig dimensioniert, die Antenne dagegen mehrmodenfähig ist, dass zwischen dem Hohlleiter und der Antenne ein erster Querschnittsanpasser vorgesehen ist, der so dimensioniert ist, dass er keine oder nur in unwesentlichem Maße höhere Moden als der Grundmode erzeugt.

Mit anderen Worten ausgedrückt heißt dies, dass der speisende Hohlleiter monomodig ausgeführt ist, das angeschlossene Antennensystem aber zur Minderung der Wassertropfenbeeinträchtigung so groß dimensioniert wird, dass es Mehrmodenausbreitung zuläßt und dass zwischen Hohlleiter und Antennensystem ein erster Querschnittsanpasser in einer Dimensionierung vorgesehen ist, die keine oder nur in unwesentlichem Maße höhere Moden entstehen läßt.

Durch die erfindungsgemäße Maßnahme, die Antenne mehrmodenfähig auszulegen, wird eine beträchtliche Verringerung der Empfindlichkeit gegenüber Kondensattropfen erzielt. Durch die zweite erfindungsgemäße Maßnahme, den Hohlleiter monomodig zu dimensionieren, die dritte erfindungsgemäße Maßnahme, die Antenne über einen Querschnittsanpasser mit dem Hohlleiter zu verbinden sowie die vierte erfinderische Maßnahme, den Querschnittsanpasser so zu dimensionieren, dass er nur den Grundmode des HF-Signales durchläßt, wirkt die gesamte aus Hohlleiter, Querschnittsanpasser und Antenne bestehende Anordnung trotz möglicher Mehrmodigkeit der Antenne monomodig.

Wird die erfindungsgemäße Anordnung zur Füllstandsmessung eingesetzt, so ist die Empfindlichkeit gegenüber Kondensattropfen in Folge der verhältnismäßig großen Antenne gering, während trotz Mehrmodenfähigkeit der Antenne keine das Messsignal verfälschende Echos mehr auftreten.

Die Erfindung erfüllt daher in vorteilhafter Weise die beim Stand der Technik nicht miteinander vereinbaren Forderungen nach geringer Beeinträchtigung durch Kondensattropfen und nach optimierten Übertragungs-, Sende- und Empfangseigenschaften. Weil bei der Erfindung kein Kompromiss zwischen der Empfindlichkeit gegenüber Kondensattropfen und optimaler elektrischer Eigenschaften mehr erforderlich ist, ist das Messsignal frei von verfälschenden Echos und wird nur noch durch Kondensattropfen störend beeinflußt. Es zeigen:
- Figur 1: ein erstes Ausführungsbeispiel der Erfindung,
- Figur 2: ein zweites Ausführungsbeispiel der Erfindung,
- Figur 3 und 4: ein drittes Ausführungsbeispiel der Erfindung,
- Figur 5 und 6: eine Anordnung aus Hohlleiter und Antenne gemäß dem Stand der Technik.

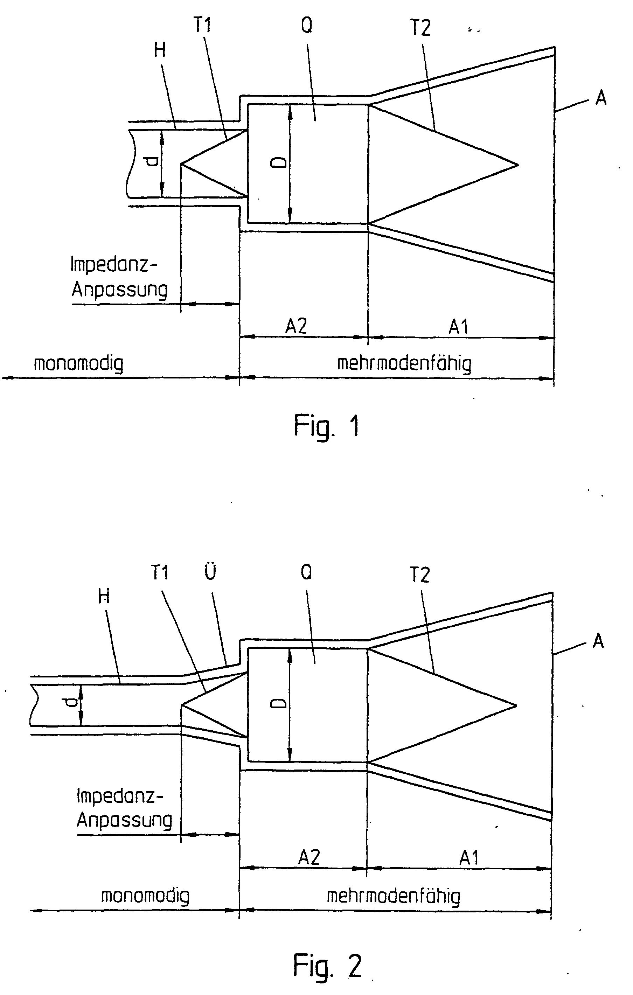

In Fig. 1 ist am einen Ende eines mit Luft gefüllten Hohlleiters H erfindungsgemäß ein erster Querschnittsanpasser T1 eingesetzt, der z. B. pyramiden- oder kegelförmig ausgestaltet ist und sich verjüngend in den Hohlraum des Hohlleiter H erstreckt. An den Querschnittsanpasser T1 schließt sich die Antenne A an, die z. B. als Hornstrahler ausgeführt sein kann, und in deren Trichter ein zweiter z. B. pyramiden- oder kegelförmiger Querschnittsanpasser T2 sitzt, dessen Spitze in Strahlrichtung weist, während die Spitze des ersten Querschnittsanpassers T1 in entgegengesetzter Richtung in den Hohlleiter H zeigt. Die Antenne A ist gemäß Fig. 1 als Hornstrahler ausgebildet und weist einen in Abstrahlrichtung gesehen aufweitenden ersten Abschnitt A1 und einen sich in Richtung Hohlleiter anschließenden zweiten Abschnitt A2 mit konstanten Durchmesser D auf. Der Durchmesser D ist im gezeigten Ausführungsbeispiel deutlich größer als der Durchmesser d des Hohlleiters H. Der zweite Abschnitt A2 der Antenne ist vollständig mit einem Dielektriummaterial Q ausgefüllt, wobei sich jeweils stirnseitig an dieses Dielektrikummaterial Q die beiden erwähnten Querschnittsanpasser T1 und T2 vorzugsweise luftspaltfrei anschließen. Zweckmäßigerweise sind die beiden Querschnittsanpasser T1 und T2 gemeinsam mit dem dazwischenliegende Dielektrikumsmaterial Q einstückig ausgebildet.

Der Querschnitt bzw. der Durchmesser d des Hohlleiters H ist, wie erwähnt, so dimensioniert, dass er für die Hochfrequenz monomodig wirkt und deshalb kleiner als der Querschnitt bzw. Durchmesser D der Antenne A im Abschnitt A2, die zur Verringerung der Beeinträchtigung durch Kondensattropfen eine größere Oberfläche aufweist. Als Hohlleiter H kann ein Rund- oder ein Rechteckhohlleiter vorgesehen sein.

Das in Fig. 2 abgebildete Ausführungsbeispiel ist weitgehend wie das in Figur 1 dargestellte Ausführungsbeispiel aufgebaut, unterscheidet sich jedoch dadurch, dass sich der Querschnitt des Hohlleiters H in einem Übergangsbereich Ü auf den Querschnitt der Antenne A kegel- oder pyramidenförmig erweitert. Der Querschnittsanpasser T1 ragt wie beim ersten Ausführungsbeispiel in den Hohlleiter H hinein.

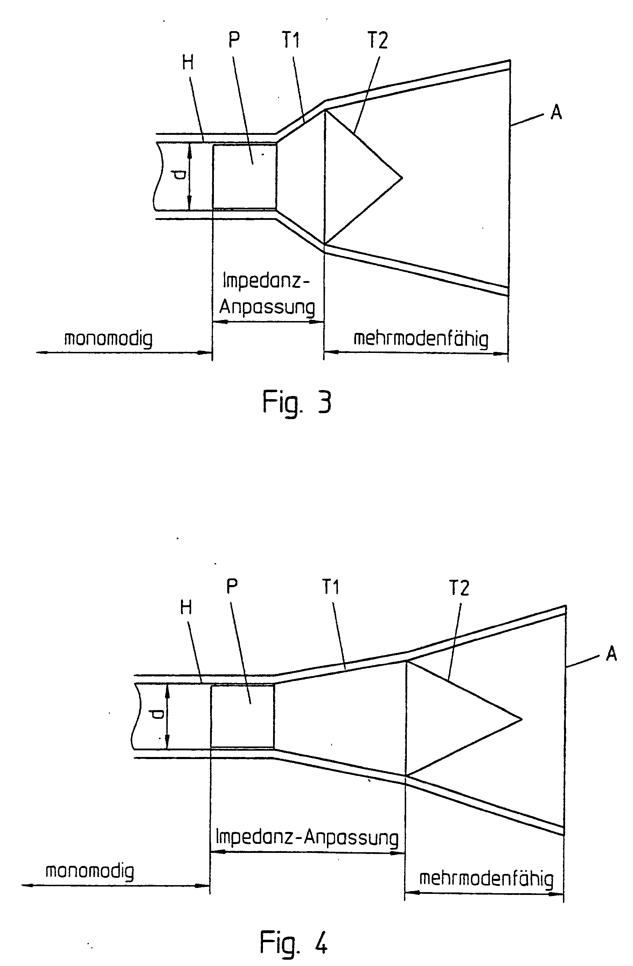

Bei dem Ausführungsbeispiel von Fig. 3 sitzt im Inneren des Trichters der Antenne A ein Querschnittsanpasser T2, an den sich ein Querschnittsanpasser T1 mit sich zum Hohlleiter H hin verjüngendem Querschnitt anschließt. Der Querschnittsanpasser T1 läuft jedoch nicht spitz zu, sondern verjüngt sich nur bis auf einen Querschnitt, der dem des Hohlleiters H entspricht. Der Querschnittsanpasser T1 hat einen Ansatz P, auf den der mit Dielektrikum gefüllte Hohlleiter H ähnlich wie auf einem Paßsitz aufsteckbar ist. Der Ansatz P weist einen konstanten Durchmesser auf.

In der Figur 4 ist ein ähnliches Ausführungsbeispiel der Erfindung wie in Fig. 3 gezeigt, jedoch mit anderen Abmessungen. Bei allen Ausführungsbeispielen der Erfindung können die beiden Querschnittsanpasser T1 und T2 aus einem Stück eines dielektrischen Materials gefertigt sein. Die Erfindung ist für Horn-, Parabol- und Stabantennen geeignet. Als Hohlleiter können Rund- oder Rechteckhohlleiter eingesetzt werden.

Besonders gut ist die Erfindung für Füllstandsmessgeräte geeignet, jedoch keineswegs auf diesen Einsatzbereich beschränkt. Sie läßt sich überall dort vorteilhaft einsetzen, wo - aus welchen Gründen auch immer - eine bezüglich der Frequenz mehrmodenfähige Antenne vorgesehen ist, denn die Erfindung ermöglicht den Einsatz eines monomodigen Hohlleiters und erzielt mittels eines Querschnittanpassers trotz der mehrmodenfähigen Antenne eine monomodige Ausbreitung der Sendeund Empfangssignale im Hohlleiter und in der Antenne.

### Bezugszeichenliste

- A: Antenne
- H: Hohlleiter
- K: Kondensattropfen
- T1, T2: Querschnittsanpasser, Taper
- P: Ansatz
- d: Durchmesser des Hohlleiters
- D: Durchmesser eines Abschnittes der Antenne
- A1: erster Abschnitt
- A2: zweiter Abschnitt

## Patentansprüche

1. Anordnung mit einem Hohlleiter (H) und einer Antenne (A) sowie mit einem zwischen Hohlleiter (H) und Antenne (A) angeordneten und aus Dielektrikum bestehenden Querschnittsanpasser (T1, T2),
**dadurch gekennzeichnet, dass** der Hohlleiter (H) in Bezug auf die Frequenz eines zu übertragenden Signals monomodig , die Antenne (A) dagegen mehrmodenfähig dimensioniert ist, dass sich der Querschnittsanpasser (T1) zumindest teilweise in den Hohlleiter (H) hineinerstreckt, sich vom Ende des Hohlleiters (H) in Richtung Antenne (A) im Durchmesser verbreitert und innerhalb der Antenne (A) verjüngend fortsetzt, wobei der Querschnittsanpasser (T1, T2) insgesamt so dimensioniert ist, dass er keine oder nur in unwesentlichem Maße höhere Moden als den Grundmode erzeugt.

2. Anordnung nach Anspruch 1,
**dadurch gekennzeichnet, dass** sich der Querschnittsanpasser (T1, T2) in den Hohlleiter (H) hinein verjüngt.

3. Anordnung nach Anspruch 2,
**dadurch gekennzeichnet, dass** der Querschnittsanpasser (T1) spitzförmig in den Hohlleiter (H) hin zuläuft und dass seine Spitze in den Hohlraum des Hohlleiters (H) ragt.

4. Anordnung nach Anspruch 3,
**dadurch gekennzeichnet, dass** sich der Querschnitt der Antenne (A) zum Hohlleiter (H) hin auf dessen Querschnitt verjüngt.

5. Anordnung nach Anspruch 2,
**dadurch gekennzeichnet, dass** der Querschnittsanpasser (T1) in massiver Form aus einem Dielektrikum ausgeführt ist, dessen ein Ende im Hohlraum des Hohlleiters (H) passförmig sitzt, während an dessen anderem Ende die Antenne (A) aufgesetzt ist, und dass der Querschnitt des anderen Endes des ersten Querschnittanpassers (T1) und der Querschnitt der Antenne (A) an der gemeinsamen Berührungsfläche gleich groß sind.

6. Anordnung nach einem der vorangehenden Ansprüche 1 bis 5,
**dadurch gekennzeichnet, dass** als Antenne (A) eine Horn- oder eine Parabolantenne vorgesehen ist.

7. Anordnung nach einem der vorangehenden Ansprüche 1 bis 8,
**dadurch gekennzeichnet, dass** der Hohlleiter (H) als Rundhohlleiter oder Rechteckhohlleiter ausgeführt ist.

## Claims

1. Arrangement with a waveguide (H) and an antenna (A) as well as with a cross-section adapter (T1, T2) arranged between waveguide (H) and antenna (A) and consisting of dielectric material, **characterised in that** the waveguide (H) is sized mono-modally with regard to the frequency of the signal to be transmitted, the antenna (A), in contrast, being capable of multi-mode operation, **in that** the cross-section adapter (T1) extends at least partially into the waveguide (H), increases in diameter from the end of the waveguide (H) in the direction of antenna (A) and continues to reduce within the antenna (A), the cross-section adapter (T1, T2) being sized overall so that it produces no higher modes than the fundamental mode or only higher modes of insignificant magnitude.

2. Arrangement according to Claim 1, **characterised in that** the cross-section adapter (T1, T2) reduces into the waveguide (H).

3. Arrangement according to Claim 2, **characterised in that** the cross-section adapter (T1) tapers in the direction of the waveguide (H) and **in that** its point protrudes into the hollow space of the waveguide (H).

4. Arrangement according to Claim 3, **characterised in that** the cross section of the antenna (A) reduces in the direction of the waveguide (H) to its cross section.

5. Arrangement according to Claim 2, **characterised in that** the cross-section adapter (T1) is designed in solid form from a dielectric material, one end or which sits snugly in the hollow space of the waveguide (H) while the antenna (A) is fitted to its other end and **in that** the cross section of the other end of the first cross-section adapter (T1) and the cross section of the antenna (A) are the same size at the common contact surface.

6. Arrangement according to one of the preceding Claims 1 to 5, **characterised in that** a horn or a parabolic antenna is provided as antenna (A).

7. Arrangement according to one of the preceding Claims 1 to 8 [sic], **characterised in that** the waveguide (H) is designed as a round waveguide or a rectangular waveguide.

## Revendications

1. Dispositif comprenant un guide d'ondes (H) et une antenne (A) ainsi qu'un adaptateur de section (T1, T2) entre le guide d'ondes (H) et l'antenne (A),
**caractérisé en ce que**
le guide d'ondes (H) est monomode par rapport à la fréquence d'un signal à transmettre, alors que l'antenne (A) est multimode de sorte que l'adaptateur de section (T1) pénètre au moins en partie dans le guide d'ondes (H) avec son diamètre s'élargissant de l'extrémité du guide d'ondes (H) en direction de l'antenne (A), et se poursuit en se rétrécissant dans l'antenne (A),
l'adaptateur de section (T1, T2) étant globalement dimensionné pour ne générer comme mode de base aucun mode, ou seulement des modes supérieurs de manière négligeable.

2. Dispositif selon la revendication 1,
**caractérisé en ce que**
l'adaptateur de section (T1, T2) va en diminuant dans le guide d'ondes (H).

3. Dispositif selon la revendication 2,
**caractérisé en ce que**
l'adaptateur de section (T1) se termine en pointe dans le guide d'ondes (H) et sa pointe pénètre dans la cavité du guide d'ondes (H).

4. Dispositif selon la revendication 3,
**caractérisé en ce que**
la section de l'antenne (A) va en diminuant vers le guide d'ondes (H) par rapport à la section de celui-ci.

5. Dispositif selon la revendication 2,
**caractérisé en ce que**
l'adaptateur de section (T1) est réalisé sous une forme massive en un diélectrique dont une extrémité est logée de manière ajustée dans la cavité du guide d'ondes (H) alors que son autre extrémité porte l'antenne (A), et la section de l'autre extrémité du premier adaptateur de section (T1) et la section de l'antenne (A) sont de mêmes dimensions au niveau de la surface de contact commune.

6. Dispositif selon l'une quelconque des revendications 1 à 5,
**caractérisé en ce que**
l'antenne (A) est une antenne à pavillon ou une antenne parabolique.

7. Dispositif selon l'une quelconque des revendications 1 à 8,
**caractérisé en ce que**
le guide d'ondes (H) est un guide d'ondes de section ronde ou de section rectangulaire.
